# EUROPÄISCHE PATENTSCHRIFT

(11) **EP 0 759 947 B1**
(45) Veröffentlichungstag und Bekanntmachung des Hinweises auf die Patenterteilung: **19.07.2000**
(21) Anmeldenummer: 95920023.9
(22) Anmeldetag: 11.05.1995
(51) Int. Cl.: C08G 63/672, C11D 3/37, C11D 3/00

(54) **SCHMUTZABLÖSEVERMÖGENDE POLYESTER**
SOIL RELEASE POLYESTERS
POLYESTERS FACILITANT LE LAVAGE

(30) Priorität: 20.05.1994 DE 4417686; 25.01.1995 DE 19502181
(43) Veröffentlichungstag der Anmeldung: 05.03.1997
(73) Patentinhaber: Henkel Kommanditgesellschaft auf Aktien, 40191 Düsseldorf (DE)
(72) Erfinder: BIRNBRICH, Paul, D-42719 Solingen (DE); MEINE, Georg, D-40822 Mettmann (DE); PASTURA, Amerigo, D-58453 Witten (DE); SCHAMBIL, Fred, D-40789 Monheim (DE)
(86) Internationale Anmeldenummer: EP9501786
(87) Internationale Veröffentlichungsnummer: WO9532232

(56) Entgegenhaltungen:
- EP-A- 0 241 985
- EP-A- 0 272 033
- WO-A-95/25158
- GB-A- 682 866
- NL-A- 7 805 926

## Beschreibung

Die Erfindung betrifft neue schmutzablösevermögende Polymere, ein Verfahren zu deren Herstellung sowie Wasch- und Reinigungsmittel, die derartige schmutzablösevermögende Polymere enthalten.

Waschmittel enthalten neben den für den Waschprozess unverzichtbaren Inhaltsstoffen wie Tensiden und Buildermaterialien in der Regel weitere Bestandteile, die man unter dem Begriff Waschhilfsstoffe zusammenfassen kann und die so unterschiedliche Wirkstoffgruppen wie Schaumregulatoren, Vergrauungsinhibitoren, Bleichmittel, Bleichaktivatoren und Farbübertragungsinhibitoren umfassen. Zu derartigen Hilfsstoffen gehören auch Substanzen, welche der Wäschefaser schmutzabstoßende Eigenschaften verleihen und die, falls während des Waschvorgangs anwesend, das Schmutzablösevermögen der übrigen Waschmittelbestandteile unterstützen. Gleiches gilt sinngemäß auch für Reinigungsmittel für harte Oberflächen. Derartige schmutzablösevermögende Substanzen werden oft als "Soil-Release"-Wirkstoffe oder wegen ihres Vermögens, die behandelte Oberfläche, zum Beispiel der Faser, schmutzabstoßend auszurüsten, als "Soil-Repellents" bezeichnet. Wegen ihrer chemischen Ähnlichkeit zu Polyesterfasern besonders wirksame schmutzablösevermögende Wirkstoffe, die aber auch bei Geweben aus anderem Material die erwünschte Wirkung zeigen können, sind Copolyester, die Dicarbonsäureeinheiten, Alkylenglykoleinheiten und Polyalkylenglykoleinheiten enthalten. Schmutzablösevermögende Copolyester der genannten Art wie auch ihr Einsatz in Waschmitteln sind seit langer Zeit bekannt.

So beschreibt zum Beispiel die deutsche Offenlegungsschrift DT 16 17 141 ein Waschverfahren unter Einsatz von Polyethylenterephthalat-Polyoxyethylenglykol-Copolymeren. Die deutsche Offenlegungsschrift DT 22 00 911 betrifft Waschmittel, die Niotensid und ein Mischpolymer aus Polyoxyethylenglykol und Polyethylenterephthalat enthalten. In der deutschen Offenlegungsschrift DT 22 53 063 sind saure Textilausrüstungsmittel genannt, die ein Copolymer aus einer dibasigen Carbonsäure und einem Alkylen- oder Cycloalkylenpolyglykol sowie gegebenenfalls einem Alkylen- oder Cycloalkylenglykol enthalten. Polymere aus Ethylenterephthalat und Polyethylenoxid-terephthalat, in denen die Polyethylenglykol-Einheiten Molgewichte von 750 bis 5000 aufweisen und das Molverhältnis von Ethylenterephthalat zu Polyethylenoxid-terephthalat 50:50 bis 90:10 beträgt, und deren Einsatz in Waschmitteln ist in der deutschen Patentschrift DE 28 57 292 beschrieben. Polymere mit Molgewicht 15 000 bis 50 000 aus Ethylenterephthalat und Polyethylenoxid-terephthalat, wobei die Polyethylenglykol-Einheiten Molgewichte von 1000 bis 10 000 aufweisen und das Molverhältnis von Ethylenterephthalat zu Polyethylenoxid-terephthalat 2:1 bis 6:1 beträgt, können gemäß der deutschen Offenlegungsschrift DE 33 24 258 in Waschmitteln eingesetzt werden. Das europäische Patent EP 066 944 betrifft Textilbehandlungsmittel, die einen Copolyester aus Ethylenglykol, Polyethylenglykol, aromatischer Dicarbonsäure und sulfonierter aromatischer Dicarbonsäure in bestimmten Molverhältnissen enthalten. Aus dem europäischen Patent EP 185 427 sind Methyl- oder Ethylgruppen-endverschlossene Polyester mit Ethylen-und/oder Propylenterephthalat- und Polyethylenoxid-terephthalat-Einheiten und Waschmitel, die derartiges Soil-release-Polymer enthalten, bekannt. Das europäische Patent EP 241 984 betrifft einen Polyester, der neben Oxyethylen-Gruppen und Terephthalsäureeinheiten auch substituierte Ethyleneinheiten sowie Glycerineinheiten enthält. Aus dem europäischen Patent EP 241 985 sind Polyester bekannt, die neben Oxyethylen-Gruppen und Terephthalsäureeinheiten 1,2-Propylen-, 1,2-Butylen- und/oder 3-Methoxy-1,2-propylengruppen sowie Glycerineinheiten enthalten und mit C₁- bis C₄-Alkylgruppen endgruppenverschlossen sind. Die europäische Patentschrift EP 253 567 betrifft Soil-release-Polymere mit einer Molmasse von 900 bis 9000 aus Ethylenterephthalat und Polyethylenoxid-terephthalat, wobei die Polyethylenglykol-Einheiten Molgewichte von 300 bis 3000 aufweisen und das Molverhältnis von Ethylenterephthalat zu Polyethylenoxid-terephthalat 0,6 bis 0,95 beträgt. Aus der europäischen Patentanmeldung EP 272 033 sind zumindest anteilig durch C₁₋₄-Alkyl- oder Acylreste endgruppenverschlossene Polyester mit Poly-propylenterephthalat- und Polyoxyethylenterephthalat-Einheiten bekannt. Das europäische Patent EP 274 907 beschreibt sulfoethyl-endgruppenverschlossene terephthalathaltige Soil-release-Polyester. In der europäischen Patentanmeldung EP 357 280 werden durch Sulfonierung ungesättigter Endgruppen Soil-Release-Polyester mit Terephthalat-, Alkylenglykol- und Poly-C₂₋₄-Glylkol-Einheiten hergestellt. Vor diesem Hintergrund des umfangreichen Standes der Technik hatte sich die Anmelderin die Aufgabe gestellt, neue, bei fettigen Anschmutzungen besser wirksame schmutzablösevermögende Polymere zu entwickeln.

Diese Aufgabe wurde im wesentlichen gelöst durch die Optimierung der Monomerzusammensetzung der Polyalkylenglykolphthalate und gegebenenfalls eine Endgruppenmodifizierung von Polyalkylenglykolphthalaten durch Veresterung der terminalen Hydroxylgruppen mit bestimmten Carbonsäuren.

Gegenstand der Erfindung ist ein schmutzablösevermögender Polyester der allgemeinen Formel

X-(O-(CHR-)ₐ)_{b}[O-OC-Ph-CO-(O-(CHR-)ₒ)ₚ]_{y}O-Y (I)

in der
- a: eine Zahl von 2 bis 8,
- b: eine Zahl von 1 bis 300,
- o: eine Zahl von 2 bis 8,
- p: eine Zahl von 1 bis 300 und
- y: eine Zahl von 1 bis 500 bedeutet,
- Ph: ein o-, m- oder p-Phenylenrest ist, der 1 bis 4 Substituenten, ausgewählt aus Alkylresten mit 1 bis 22 C-Atomen, Sulfonsäuregruppen, Carboxylgruppen und deren Mischungen, tragen kann,
- R: ausgewählt wird aus Wasserstoff, einem Alkylrest mit 1 bis 22 C-Atomen und deren Mischungen, und
- X: und
- Y: unabhängig voneinander aus Wasserstoff, Alkyl-, Alkenyl- und Arylmonocarbonsäureresten, ausgewählt aus Capronsäure, Önanthsäure, Caprylsäure, Pelargonsäure, Caprinsäure, Undecansäure, Undecensäure, Laurinsäure, Lauroleinsäure, Tridecansäure, Myristinsäure, Myristoleinsäure, Pentadecansäure, Palmitinsäure, Stearinsäure, Petroselinsäure, Petroselaidinsäure, Ölsäure, Linolsäure, Linolaidinsäure, Linolensäure, Eläostearinsäure, Arachinsäure, Gadoleinsäure, Arachidonsäure, Behensäure, Erucasäure, Brassidinsäure, Clupanodonsäure, Lignocerinsäure, Cerotinsäure, Melissinsäure und Benzoesäure, die 1 bis 5 Substituenten mit insgesamt bis zu 25 C-Atomen trägt, Hydroxymonocarbonsäureresten mit 2 bis 22 C-Atomen und einem Oligomerisierungsgrad von 1 bis 100 sowie Dicarbonsäurehalbesterresten, deren zweite Carbonsäuregruppe mit einem Alkohol A-(OCHZCH₂)_{d}-OH verestert ist, bei dem A einen Alkyl- oder Alkenylrest mit 8 bis 22 C-Atomen, Z Wasserstoff oder einen Alkylrest mit 1 bis 2 C-Atomen und d eine Zahl von 1 bis 40 bedeutet, ausgewählt werden mit der Maßgabe, daß X und Y nicht gleichzeitig Wasserstoff sind.

Ein weiterer Gegenstand der Erfindung ist die Verwendung derartiger schmutzablösevermögender Polyester in Wasch- und Reinigungsmitteln, insbesondere zur Erhöhung ihrer Reinigungsleistung gegenüber fettigen Anschmutzungen.

Die endgruppenverschlossenen Vertreter der Verbindungen gemäß Formel (I) sind formal aus drei Monomerteilen aufgebaut. Das erste Monomer ist eine Dicarbonsäure HOOC-Ph-COOH, das zweite Monomer ist ein Diol HO-(CHR-)ₐOH beziehungsweise HO-(CHR-)ₒOH, das auch als polymeres Diol H-(O-(CHR-)ₐ)_{b}OH beziehungsweise H-(O-(CHR-)ₒ)ₚOH vorliegen kann, und das dritte Monomer (X beziehungsweise Y) ist eine Monocarbonsäure, die Hydroxylgruppen und/oder veresterte weitere Carboxylgruppen tragen kann, wobei eine der beiden Endgruppen X oder Y auch Wasserstoff sein kann.

Soweit bei den erfindungsgemäßen Verbindungen der Formel (I) von Alkyl-, Alkenyl- oder Arylgruppen die Rede ist, umfassen diese auch ihre inert substituierten, insbesondere halogenierten, Derivate.

Vorzugsweise liegen in den Polyestern der Formel (I) sowohl Monomerdioleinheiten -O-(CHR-)ₐO- beziehungsweise -O-(CHR-)ₒO- als auch Polymerdioleinheiten -(O-(CHR-)ₐ)_{b}O- beziehungsweise -(O-(CHR-)ₒ)ₚO- vor. Das molare Verhältnis von Monomerdioleinheiten zu Polymerdioleinheiten beträgt vorzugsweise 100 : 1 bis 1 : 100, insbesondere 10 : 1 bis 1 : 10. In den Polymerdioleinheiten liegt der Polymerisationsgrad b beziehungsweise p vorzugsweise im Bereich von 4 bis 200, insbesondere von 12 bis 140. In einer weiteren bevorzugten Ausführungsform der Polyester gemäß Formel (I) liegen Oligomerdioleinheiten -(O-(CHR-)ₐ)_{b}O- beziehungsweise -(O-(CHR-)ₒ)ₚO- mit b beziehungsweise p von 2 bis 3 neben Polymerdioleinheiten -(O-(CHR-)ₐ)_{b}O- beziehungsweise -(O-(CHR-)ₒ)ₚO- mit b beziehungsweise p von 4 bis 200, insbesondere 12 bis 140 vor. In diesen beträgt das molare Verhältnis von Oligomerdioleinheiten zu Polymerdioleinheiten vorzugsweise 100 : 1 bis 1 : 100, insbesondere 10 : 1 bis 1 : 10. Bevorzugtes Oligomerdiol ist Diethylenglykol.

Das Molekulargewicht beziehungsweise das mittlere Molekulargewicht oder das Maximum der Molekulargewichtsverteilung der erfindungsgemäßen Polyester gemäß Formel (I) liegt vorzugsweise im Bereich von 250 bis 100 000, insbesondere von 50 bis 50 000 und besonders bevorzugt von 1 000 bis 15 000.

In Formel (I) wird die dem Rest Ph zugrundeliegende Säure vorzugsweise aus Terephtalsäure, Isophthalsäure, Phthalsäure, Mellithsäure, Trimellithsäure, den Isomeren der Sulfophthalsäure, Sulfoisophthalsäure und Sulfoterephtalsäure sowie deren Gemischen ausgewählt. Sofern deren Carbonsäuregruppen nicht Teil der Esterbindungen im Polymer sind, liegen sie vorzugsweise in Salzform, insbesondere als Alkali- oder Ammoniumsalz vor. Unter diesen sind die Natrium- und Kaliumsalze besonders bevorzugt. Gewünschtenfalls können statt des Monomers HOOC-Ph-COOH geringe Anteile, insbesondere nicht mehr als 10 Mol-% bezogen auf den Anteil an Ph mit der oben gegebenen Bedeutung, anderer Säuren, die mindestens zwei Carboxylgruppen aufweisen, im Polymer der Formel (I) enthalten sein. Zu diesen gehören beispielsweise Alkylen- und Alkenylendicarbonsäuren wie Malonsäure, Bernsteinsäure, Fumarsäure, Maleinsäure, Glutarsäure, Adipinsäure, Pimelinsäure, Korksäure, Azelainsäure und Sebacinsäure.

Zu den bevorzugten Diolen HO-(CHR-)ₐOH beziehungsweise HO-(CHR-)ₒOH gehören solche, in denen R Wasserstoff und a beziehungsweise o unabhängig voneinander eine Zahl von 2 bis 8, insbesondere von 2 bis 6 ist, und solche, in denen a beziehungsweise o den Wert 2 aufweist und in denen R unter Wasserstoff und den Alkylresten mit 1 bis 10, insbesondere 1 bis 3 C-Atomen ausgewählt wird. Unter den letztgenannten Diolen sind solche der Formel HO-CH₂-CHR-OH, in der R die obengenannte Bedeutung besitzt, bevorzugt. Beispiele für Diolkomponenten sind Ethylenglykol, 1,2-Propylenglykol, 1,3-Propylenglykol, 1,4-Butandiol, 1,5-Pentandiol, 1,6-Hexandiol, 1,8-Octandiol, 1,2-Decandiol, 1,2-Dodecandiol und Neopentylglykol.

Den über Estergruppen gebundenen Endgruppen X und Y können Alkyl-, Alkenyl- und Arylmonocarbonsäuren ausgewählt aus Capronsäure, Önanthsäure, Caprylsäure, Pelargonsäure, Caprinsäure, Undecansäure, Undecensäure, Laurinsäure, Lauroleinsäure, Tridecansäure, Myristinsäure, Myristoleinsäure, Pentadecansäure, Palmitinsäure, Stearinsäure, Petroselinsäure, Petroselaidinsäure, Ölsäure, Linolsäure, Linolaidinsäure, Linolensäure, Eläostearinsäure, Arachinsäure, Gadoleinsäure, Arachidonsäure, Behensäure, Erucasäure, Brassidinsäure, Clupanodonsäure, Lignocerinsäure, Cerotinsäure, Melissinsäure und Benzoesäure, die 1 bis 5 Substituenten mit insgesamt bis zu 25 C-Atomen, insbesondere 1 bis 12 C-Atomen trägt, beispielsweise tert.-Butylbenzoesäure.

Den Endgruppen X und Y können auch Hydroxymonocarbonsäuren mit 2 bis 22, insbesondere 5 bis 22 C-Atomen zugrundeliegen, zu denen beispielsweise Milchsäure, Hydroxyvaleriansäure, Hydroxycapronsäure, Ricinolsäure, deren Hydrierungsprodukt Hydroxystearinsäure sowie o-, m- und p-Hydroxybenzoesäure gehören. Die Hydroxymonocarbonsäuren können ihrerseits über ihre Hydroxylgruppe mit den obenganennten Alkyl-, Alkenyl- und Arylmonocarbonsäuren und/oder gegebenenfalls mit weiteren Hydroxymonocarbonsäuren verbunden sein. Im letztgenannten Fall liegen die Hydroxymonocarbonsäuren mehrfach in einer Endgruppe X beziehungsweise Y vor. Vorzugsweise liegt dabei die Anzahl der Hydroxymonocarbonsäureeinheiten pro Endgruppe, der Oligomerisierungsgrad, im Bereich von 1 bis 50, insbesondere von 1 bis 10.

Den Endgruppen X und Y können auch Dicarbonsäurehalbester zugrundeliegen, deren eine Carbonsäuregruppe mit einem Alkohol A-(OCHZCH₂)_{d}-OH verestert ist. Zu derartigen Dicarbonsäuren gehören Oxalsäure, Malonsäure, Bernsteinsäure, Maleinsäure, Fumarsäure, Glutarsäure, Adipinsäure, Sorbinsäure, Pimelinsäure, Korksäure, Azelainsäure, Sebacinsäure, Brassylsäure, Thapisäure, Phellogensäure, Phthalsäure, Terephtalsäure und Isophthalsäure. Die Alkoholkomponente des Dicarbonsäurehalbesters ist ein alkoxylierter Alkohol A-(OCHZCH₂)_{d}-OH, bei dem A einen Alkyl- oder Alkenylrest mit 8 bis 22 C-Atomen, insbesondere 12 bis 18 C-Atomen, Z Wasserstoff oder einen Alkylrest mit 1 bis 2 C-Atomen, insbesondere Wasserstoff bedeutet, und der Alkoxylierunsgrad d, der als analytisch zu ermittelnde Zahl auch gebrochene Werte annehmen kann, im Bereich von 1 bis 40, insbesondere 10 bis 35 liegt.

Die endgruppenmodifizierten Polymere unter den erfindungsgemäßen schmutzablösevermögenden Polyestern können in einfacher Weise durch Umsetzung hydroxylgruppenterminierter Polyester, wie sie beispielsweise unter den Bezeichnungen Sokalan^{(R)} HC 9798 der BASF oder Velvetol^{(R)} 251C der Firma Rhöne-Poulenc im Handel vertrieben werden, mit Carbonsäuren beziehungsweise reaktiven Carbonsäurederivaten, wie Säurechloriden, Anhydriden, niederen Estern oder Lactonen, hergestellt werden. Falls eine Carbonsäure beziehungsweise deren reaktives Derivat zur Endgruppenmodifizierung eingesetzt wird, die eine Hydroxylgruppe trägt, kann die Carbonsäure mit dem Reaktionsprodukt weiterreagieren, wenn sie im Überschuß vorhanden ist. Unter dem Oligomerisierungsgrad wird die Zahl dieser Reaktionen, das heißt die Anzahl der Kondensationen der Hydroxycarbonsäure pro Endgruppe X oder Y, verstanden. Falls eine Dicarbonsäure beziehungsweise ein reaktives Dicarbonsäurederivat zur Endgruppenmodifizierung verwendet werden soll, ist darauf zu achten, daß sie beziehungsweise dieses im Überschuß eingesetzt wird, so daß sich nur der Halbester der Dicarbonsäure bildet. Dieser wird anschließend mit einem alkoxylierten Alkohol umgesetzt, so daß die nach Umsetzung mit dem hydroxylgruppenterminierten Soil-Release-Polyester noch freien Säuregruppen der ursprünglichen Dicarbonsäure mit dem alkoxylierten Alkohol verestert werden. Auch die umgekehrte Führung der Reaktionsschritte, das heißt die Bildung von Halbestern alkoxylierter Alkohole und deren anschließende Umsetzung mit hydroxylgruppenterminierten Polyestern, ist möglich.

Vorzugsweise werden die erfindungsgemäßen Soil-release-Polyester in der Weise hergestellt, daß man eine Dicarbonsäure HOOC-Ph-COOH, in der Ph die oben angegebene Bedeutung besitzt und die insbesondere Terephthalsäure, Isophthalsäure, Phthalsäure oder ein Gemisch aus diesen ist, mit einem monomeren Diol HO-(CHR-)ₐOH, in dem R und a die oben angebenenen Bedeutungen besitzen und das insbesondere Ethylenglykol, Propylengylkol, Butylenglykol oder ein Gemisch aus diesen ist, oder einem oligomeren Diol H-(O-(CHR-)ₐ)_{b}OH, in dem b 2 oder 3 ist und R und a die oben angebenenen Bedeutungen besitzen, unter Veresterungsbedingungen, beispielsweise unter Säurekatalyse, miteinander umsetzt, wobei statt der Dicarbonsäure auch ein obengenanntes reaktives Dicarbonsäurederivat zum Einsatz kommen kann. Das molare Verhältnis von Dicarbonsäure beziehungsweise Dicarbonsäurederivat zu monomerem Diol beziehungsweise oligomerem Diol beträgt vorzugsweise 1 : 1 bis 1 : 10, insbesondere 1 : 1 bis 1 : 4. Anschließend wird unter Umesterungsbedingungen, das heißt unter teilweisem Entfernen des monomeren Diols HO-(CHR-)ₐOH beziehungsweise des oligomeren Diols H-(O-(CHR-)ₐ)_{b}OH, beispielsweise durch gegebenenfalls unter Vakuum vorzunehmendes Abdestillieren, mit einem polymeren Diol H-(O-(CHR-)ₒ)ₚOH, in dem R, o und p die oben angegebenen Bedeutungen aufweisen, gewünschtenfalls ebenfalls unter Säurekatalyse umgesetzt, so daß sich Mischester bilden. Bevorzugte polymere Diole sind Polyethylenglykol, Polypropylenglykol, Polybutylenglykol und deren Gemische sowie Copolymere aus mindestens zwei der den genannten Homopolymeren zugrundeliegenden monomeren Diole. Die polymeren Diole weisen vorzugsweise Polymerisationsgrade von 4 bis 200, insbesondere von 10 bis 100 auf. Besonders bevorzugt ist ein Polyethylenglykol mit einer mittleren Molmasse im Bereich von 1000 bis 6000. Die Umesterung unter Entfernung des monomeren Diols beziehungsweise des oligomeren Diols wird vorzugsweise so weit geführt, bis das molare Verhältnis von monomerem Diol beziehungsweise oligomerem Diol zu polymerem Diol im entstehenden Polyester im Bereich von 50 : 1 bis 1 : 50, insbesondere von 10 : 1 bis 1 : 10 liegt. Abschließend kann, wie oben beschrieben, mit einer den Endgruppen X beziehungsweise Y zugrundeliegenden Monocarbonsäure, Hydroxymonocarbonsäure und/oder einem Dicarbonsäurehalbester unter Veresterungsbedingungen umgesetzt werden.

Wasch- oder Reinigungsmittel, die einen erfindungsgemäßen beziehungsweise nach dem erfindungsgemäßen Verfahren erhältlichen Polyester enthalten, können alle üblichen sonstigen Bestandteile derartiger Mittel enthalten, die hicht in unerwünschter Weise mit dem Soil-release Polymer wechselwirken. Vorzugsweise wird der endgruppenmodifizierte Polyester in Mengen von 0,1 Gew.-% bis 5 Gew.-%, insbesondere 0,5 Gew.-% bis 2,5 Gew.-% in Wasch- oder Reinigungsmittel eingearbeitet.

Überraschenderweise wurde gefunden, daß derartige Polyester mit den oben angegebenen Eigenschaften die Wirkung bestimmter anderer Wasch- und Reinigungsmittel inhaltsstoffe synergistisch beeinflussen und daß umgekehrt die Wirkung des Soil-release Polymers durch bestimmte andere Waschmittelinhaltsstoffe synergistisch verstärkt wird. Diese Effekte treten insbesondere bei nichtionischen Tensiden, bei enzymatischen Wirkstoffen, insbesondere Proteasen und Lipasen, bei wasserunlöslichen anorganischen Buildern, bei wasserlöslichen anorganischen und organischen Buildern, insbesondere auf Basis oxidierter Kohlenhydrate, bei Bleichmitteln auf Persauerstoffbasis, insbesondere bei Alkalipercarbonat, und bei synthetischen Aniontensiden vom Sulfat- und Sulfonattyp, allerdings nicht oder nur wenig ausgeprägt bei Alkylbenzolsulfonaten, auf, weshalb der Einsatz dergenannter Inhaltsstoffe zusammen mit erfindungsgemäßen Polymeren bevorzugt ist.

In einer bevorzugten Ausführungsform enthält ein solches Mittel nichtionisches Tensid, ausgewählt aus Fettalkylpolyglykosiden, Fettalkylpolyalkoxylaten, insbesondere -ethoxylaten und/oder -propoxylaten, Fettsäurepolyhydroxyamiden und/oder Ethoxylierungs-und/oder Propoxylierungsprodukten von Fettalkylaminen, vicinalen Diolen, Fettsäurealkylestern und/oder Fettsäureamiden sowie deren Mischungen, insbesondere in einer Menge im Bereich von 2 Gew.-% bis 25 Gew.-%.

Eine weitere Ausführungsform derartiger Mittel umfaßt die Anwesenheit von synthetischem Aniontensid vom Sulfat- und/oder Sulfonattyp, insbesondere Fettalkylsulfat, Fettalkylethersulfat, Sulfofettsäureester und/oder Sulfofettsäuredisalze, insbesondere in einer Menge im Bereich von 2 Gew.-% bis 25 Gew.-%. Bevorzugt wird das Aniontensid aus den Alkyl- bzw. Alkenylsulfaten und/oder den Alkyl- bzw. Alkenylethersulfaten ausgewählt, in denen die Alkyl- bzw. Alkenylgruppe 8 bis 22, insbesondere 12 bis 18 C-Atome besitzt.

Zu den in Frage kommenden nichtionischen Tensiden gehören die Alkoxylate, insbesondere die Ethoxylate und/oder Propoxylate von gesättigten oder einbis mehrfach ungesättigten linearen oder verzweigtkettigen Alkoholen mit 10 bis 22 C-Atomen, vorzugsweise 12 bis 18 C-Atomen. Der Alkoxylierungsgrad der Alkohole liegt dabei in der Regel zwischen 1 und 20, vorzugsweise zwischen 3 und 10. Sie können in bekannter Weise durch Umsetzung der entsprechenden Alkohole mit den entsprechenden Alkylenoxiden hergestellt werden. Geeignet sind insbesondere die Derivate der Fettalkohole, obwohl auch deren verzweigtkettige Isomere, insbesondere sogenannte Oxoalkohole, zur Herstellung verwendbarer Alkoxylate eingesetzt werden können. Brauchbar sind demgemäß die Alkoxylate, insbesondere die Ethoxylate, primärer Alkohole mit linearen, insbesondere Dodecyl-, Tetradecyl-, Hexadecyl- oder Octadecyl-Resten sowie deren Gemische. Außerdem sind entsprechende Alkoxylierungsprodukte von Alkylaminen, vicinalen Diolen und Carbonsäureamiden, die hinsichtlich des Alkylteils den genannten Alkoholen entsprechen, verwendbar. Darüberhinaus kommen die Ethylenoxid- und/oder Propylenoxid-Insertionsprodukte von Fettsäurealkylestern, wie sie gemäß dem in der internationalen Patentanmeldung WO 90/13533 angegebenen Verfahren hergestellt werden können, sowie Fettsäurepolyhydroxyamide, wie sie gemäß den Verfahren der US-amerikanischen Patentschriften US 1 985 424, US 2 016 962 und US 2 703 798 sowie der internationalen Patentanmeldung WO 92/06984 hergestellt werden können, in Betracht. Zur Einarbeitung in die erfindungsgemäßen Mittel geeignete sogenannte Alkylpolyglykoside sind Verbindungen der allgemeinen Formel (G)ₙ-OR¹, in der R¹ einen Alkyl- oder Alkenylrest mit 8 bis 22 C-Atomen, G eine Glykoseeinheit und n eine Zahl zwischen 1 und 10 bedeuten. Derartige Verbindungen und ihre Herstellung werden zum Beispiel in den europäischen Patentanmeldungen EP 92 355, EP 301 298, EP 357 969 und EP 362 671 oder der US-amerikanischen Patentschrift US 3 547 828 beschrieben. Bei der Glykosidkomponente (G)ₙ handelt es sich um Oligo- oder Polymere aus natürlich vorkommenden Aldose- oder Ketose-Monomeren, zu denen insbesondere Glucose, Mannose, Fruktose, Galaktose, Talose, Gulose, Altrose, Allose, Idose, Ribose, Arabinose, Xylose und Lyxose gehören. Die aus derartigen glykosidisch verknüpften Monomeren bestehenden Oligomere werden außer durch die Art der in ihnen enthaltenen Zucker durch deren Anzahl, den sogenannten Oligomerisierungsgrad, charakterisiert. Der Oligomerisierungsgrad n nimmt als analytisch zu ermittelnde Größe im allgemeinen gebrochene Zahlenwerte an; er liegt bei Werten zwischen 1 und 10, bei den vorzugsweise eingesetzten Glykosiden unter einem Wert von 1,5, insbesondere zwischen 1,2 und 1,4. Bevorzugter Monomer-Baustein ist wegen der guten Verfügbarkeit Glucose. Der Alkyl- oder Alkenylteil R¹ der Glykoside stammt bevorzugt ebenfalls aus leicht zugänglichen Derivaten nachwachsender Rohstoffe, insbesondere aus Fettalkoholen, obwohl auch deren verzweigtkettige Isomere, insbesondere sogenannte Oxoalkohole, zur Herstellung verwendbarer Glykoside eingesetzt werden können. Brauchbar sind demgemäß insbesondere die primären Alkohole mit linearen Octyl-, Decyl-, Dodecyl-, Tetradecyl-, Hexadecyl- oder Octadecylresten sowie deren Gemische. Besonders bevorzugte Alkylglykoside enthalten einen Kokosfettalkylrest, das heißt Mischungen mit im wesentlichen R¹=Dodecyl und R¹=Tetradecyl.

Nichtionisches Tensid ist in Mitteln, welche einen erfindungsgemäßen Soil-release Wirkstoff enthalten, vorzugsweise in Mengen von 1 Gew.-% bis 30 Gew.-%, insbesondere von 1 Gew.-% bis 25 Gew.-% enthalten.

Solche Mittel können stattdessen oder zusätzlich weitere Tenside, vorzugsweise synthetische Aniontenside des Sulfat- oder Sulfonat-Typs, in Mengen von vorzugsweise nicht über 20 Gew.-%, insbesondere von 0,1 Gew.-% bis 18 Gew.-%, jeweils bezogen auf gesamtes Mittel, enthalten. Als für den Einsatz in derartigen Mitteln besonders geeignete synthetische Aniontenside sind die Alkyl- und/oder Alkenylsulfate mit 8 bis 22 C-Atomen, die ein Alkali-, Ammonium- oder Alkyl- beziehungsweise Hydroxyalkyl-substituiertes Ammoniumion als Gegenkation tragen, zu nennen. Bevorzugt sind die Derivate der Fettalkohole mit insbesondere 12 bis 18 C-Atomen und deren verzweigtkettiger Analoga, der sogenannten Oxoalkohole. Die Alkyl- und Alkenylsulfate können in bekannter Weise durch Reaktion der entsprechenden Alkoholkomponente mit einem üblichen Sulfatierungsreagenz, insbesondere Schwefeltrioxid oder Chlorsulfonsäure, und anschließende Neutralisation mit Alkali-, Ammonium- oder Alkyl- beziehungsweise Hydroxyalkyl-substituierten Ammoniumbasen hergestellt werden. Derartige Alkyl- und/oder Alkenylsulfate sind in den Mitteln, welche ein erfindungsgemäßes Polymer enthalten, vorzugsweise in Mengen von 0,1 Gew.-% bis 20 Gew.-%, insbesondere von 0,5 Gew.-% bis 18 Gew.-% enthalten.

Zu den einsetzbaren Tensiden vom Sulfat-Typ gehören auch die sulfatierten Alkoxylierungsprodukte der genannten Alkohole, sogenannte Ethersulfate. Vorzugsweise enthalten derartige Ethersulfate 2 bis 30, insbesondere 4 bis 10 Ethylenglykol-Gruppen pro Molekül. Zu den geeigneten Aniontensiden vom Sulfonat-Typ gehören die durch Umsetzung von Fettsäureestern mit Schwefeltrioxid und anschließender Neutralisation erhältlichen α-Sulfoester, insbesondere die sich von Fettsäuren mit 8 bis 22 C-Atomen, vorzugsweise 12 bis 18 C-Atomen, und linearen Alkoholen mit 1 bis 6 C-Atomen, vorzugsweise 1 bis 4 C-Atomen, ableitenden Sulfonierungsprodukte, sowie die durch formale Verseifung aus diesen hervorgehenden Sulfofettsäuren.

Als weitere fakultative tensidische Inhaltsstoffe kommen Seifen in Betracht, wobei gesättigte Fettsäureseifen, wie die Salze der Laurinsäure, Myristinsäure, Palmitinsäure oder Stearinsäure, sowie aus natürlichen Fettsäuregemischen, zum Beispiel Kokos-, Palmkern- oder Talgfettsäuren, abgeleitete Seifen geeignet sind. Insbesondere sind solche Seifengemische bevorzugt, die zu 50 Gew.-% bis 100 Gew.-% aus gesättigten C₁₂-C₁₈-Fettsäureseifen und zu bis 50 Gew.-% aus Ölsäureseife zusammengesetzt sind. Vorzugsweise ist Seife in Mengen von 0,1 Gew.-% bis 5 Gew.-% enthalten. Insbesondere in flüssigen Mitteln, welche ein erfindungsgemäßes Polymer enthalten, können jedoch auch höhere Seifenmengen von in der Regel bis zu 20 Gew.-% enthalten sein.

In einer weiteren Ausführungsform enthält ein Mittel, welches einen erfindungsgemäß endgruppenmodifizierten Polyester enthält, wasserlöslichen und/ oder wasserunlöslichen Builder, insbesondere ausgewählt aus Alkalialumosilikat, kristallinem Alkalisilikat mit Modul über 1, monomerem Polycarboxylat, polymerem Polycarboxylat und deren Mischungen, insbesondere in Mengen im Bereich von 2,5 Gew.-% bis 60 Gew.-%.

Ein Mittel, welche ein erfindungsgemäßes Polymer enthält, enthält vorzugsweise 20 Gew.-% bis 55 Gew.-% wasserlöslichen und/oder wasserunlöslichen, organischen und/oder anorganischen Builder. Zu den wasserlöslichen organischen Buildersubstanzen gehören insbesondere solche aus der Klasse der Polycarbonsäuren, insbesondere Citronensäure und Zuckersäuren, sowie der polymeren (Poly-)carbonsäuren, insbesondere die durch Oxidation von Polysacchariden zugänglichen Polycarboxylate der internationalen Patentanmeldung WO 93/16110, polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Die relative Molekülmasse der Homopolymeren ungesättiger Carbonsäuren liegt im allgemeinen zwischen 5000 und 200000, die der Copolymeren zwischen 2000 und 200000, vorzugsweise 50000 bis 120000, bezogen auf freie Säure. Ein besonders bevorzugtes Acrylsäure-Maleinsäure-Copolymer weist eine relative Molekülmasse von 50000 bis 100000 auf. Geeignete, wenn auch weniger bevorzugte Verbindungen dieser Klasse sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt. Als wasserlösliche organische Buildersubstsanzen können auch Terpolymere eingesetzt werden, die als Monomere zwei Carbonsäuren und/oder deren Salze sowie als drittes Monomer Vinylalkohol und/oder ein Vinylalkohol-Derivat oder ein Kohlenhydrat enthalten. Das erste saure Monomer beziehungsweise dessen Salz leitet sich von einer monoethylenisch ungesättigten C₃-C₈-Carbonsäure und vorzugsweise von einer C₃-C₄-Monocarbonsäure, insbesondere von (Meth-)acrylsäure ab. Das zweite saure Monomer beziehungsweise dessen Salz kann ein Derivat einer C₄-C₈-Dicarbonsäure, vorzugsweise einer C₄-C₈-Dicarbonsäure sein, wobei Maleinsäure besonders bevorzugt ist. Die dritte monomere Einheit wird in diesem Fall von Vinylalkohol und/oder vorzugsweise einem veresterten Vinylalkohol gebildet. Insbesondere sind Vinylalkohol-Derivate bevorzugt, welche einen Ester aus kurzkettigen Carbonsäuren, beispielsweise von C₁-C₄-Carbonsäuren, mit Vinylalkohol darstellen. Bevorzugte Terpolymere enthalten dabei 60 Gew.-% bis 95 Gew.-%, insbesondere 70 Gew.-% bis 90 Gew.-% (Meth)acrylsäure bzw. (Meth)acrylat, besonders bevorzugt Acrylsäure bzw. Acrylat, und Maleinsäure bzw. Maleat sowie 5 Gew.-% bis 40 Gew.-%, vorzugsweise 10 Gew.-% bis 30 Gew.-% Vinylalkohol und/oder Vinylacetat. Ganz besonders bevorzugt sind dabei Terpolymere, in denen das Gewichtsverhältnis (Meth)acrylsäure beziehungsweise (Meth)acrylat zu Maleinsäure beziehungsweise Maleat zwischen 1:1 und 4:1, vorzugsweise zwischen 2:1 und 3:1 und insbesondere 2:1 und 2,5:1 liegt. Dabei sind sowohl die Mengen als auch die Gewichtsverhältnisse auf die Säuren bezogen. Das zweite saure Monomer beziehungsweise dessen Salz kann auch ein Derivat einer Allylsulfonsäure sein, die in 2-Stellung mit einem Alkylrest, vorzugsweise mit einem C₁-C₄-Alkylrest, oder einem aromatischen Rest, der sich vorzugsweise von Benzol oder Benzol-Derivaten ableitet, substituiert ist. Bevorzugte Terpolymere enthalten dabei 40 Gew.-% bis 60 Gew.-%, insbesondere 45 bis 55 Gew.-% (Meth)acrylsäure beziehungsweise (Meth)acrylat, besonders bevorzugt Acrylsäure beziehungsweise Acrylat, 10 Gew.-% bis 30 Gew.-%, vorzugsweise 15 Gew.-% bis 25 Gew.-% Methallylsulfonsäure bzw. Methallylsulfonat und als drittes Monomer 15 Gew.-% bis 40 Gew.-%, vorzugsweise 20 Gew.-% bis 40 Gew.-% eines Kohlenhydrats. Dieses Kohlenhydrat kann dabei beispielsweise ein Mono-, Di-, Oligo- oder Polysaccharid sein, wobei Mono-, Di- oder Oligosaccharide bevorzugt sind, besonders bevorzugt ist Saccharose. Durch den Einsatz des dritten Monomers werden vermutlich Sollbruchstellen in dem Polymer eingebaut, die für die gute biologische Abbaubarkeit des Polymers verantwortlich sind. Diese Terpolymere lassen sich insbesondere nach Verfahren herstellen, die in der deutschen Patentschrift DE 42 21 381 und der deutschen Patentanmeldung DE 43 00 772 beschrieben sind, und weisen im allgemeinen eine relative Molekülmasse zwischen 1000 und 200000, vorzugsweise zwischen 200 und 50000 und insbesondere zwischen 3000 und 10000 auf. Sie können, insbesondere zur Herstellung flüssiger Mittel, in Form wäßriger Lösungen, vorzugsweise in Form 30- bis 50-gewichtsprozentiger wäßriger Lösungen eingesetzt werden. Alle genannten Polycarbonsäuren werden in der Regel in Form ihrer wasserlöslichen Salze, insbesondere ihre Alkalisalze, eingesetzt.

Derartige organische Buildersubstanzen sind vorzugsweise in Mengen bis zu 40 Gew.-%, insbesondere bis zu 25 Gew.-% und besonders bevorzugt von 1 Gew.-% bis 5 Gew.-% enthalten. Mengen nahe der genannten Obergrenze werden vorzugsweise in pastenförmigen oder flüssigen, insbesondere wasserhaltigen, Mitteln eingesetzt, in welchen das erfindungsgemäße Polymer enthalten ist.

Als wasserunlösliche, wasserdispergierbare anorganische Buildermaterialien werden insbesondere kristalline oder amorphe Alkalialumosilikate, in Mengen von bis zu 50 Gew.-%, vorzugsweise nicht über 40 Gew.-% und in flüssigen Mitteln insbesondere von 1 Gew.-% bis 5 Gew.-%, eingesetzt. Unter diesen sind die kristallinen Alumosilikate in Waschmittelqualität, insbesondere Zeolith NaA und gegebenenfalls NaX, bevorzugt. Mengen nahe der genannten Obergrenze werden vorzugsweise in festen, teilchenförmigen Mitteln eingesetzt. Geeignete Alumosilikate weisen insbesondere keine Teilchen mit einer Korngröße über 30 µm auf und bestehen vorzugsweise zu wenigstens 80 Gew.-% aus Teilchen mit einer Größe unter 10 µm. Ihr Calciumbindevermögen, das nach den Angaben der deutschen Patentschrift DE 24 12 837 bestimmt werden kann, liegt im Bereich von 100 bis 200 mg CaO pro Gramm. Geeignete Substitute beziehungsweise Teilsubstitute für das genannte Alumosilikat sind kristalline Alkalisilikate, die allein oder im Gemisch mit amorphen Silikaten vorliegen können. Die in den Mitteln als Gerüststoffe brauchbaren Alkalisilikate weisen vorzugsweise ein molares Verhältnis von Alkalioxid zu SiO₂ unter 0,95, insbesondere von 1:1,1 bis 1:12 auf und können amorph oder kristallin vorliegen. Bevorzugte Alkalisilikate sind die Natriumsilikate, insbesondere die amorphen Natriumsilikate, mit einem molaren Verhältnis Na₂O:SiO₂ von 1:2 bis 1:2,8. Derartige amorphe Alkalisilikate sind beispielsweise unter dem Namen Portil^{(R)} im Handel erhältlich. Solche mit einem molaren Verhältnis Na₂O:SiO₂ von 1:1,9 bis 1:2,8 können nach dem Verfahren der europäischen Patentanmeldung EP 0 425 427 hergestellt werden. Sie werden im Rahmen der Herstellung bevorzugt als Feststoff und nicht in Form einer Lösung zugegeben. Als kristalline Silikate, die allein oder im Gemisch mit amorphen Silikaten vorliegen können, werden vorzugsweise kristalline Schichtsilikate der allgemeinen Formel Na₂SiₓO₂ₓ₊₁·yH₂O eingesetzt, in der x, das sogenannte Modul, eine Zahl von 1,9 bis 4 und y eine Zahl von 0 bis 20 ist und bevorzugte Werte für x 2, 3 oder 4 sind. Kristalline Schichtsilikate, die unter diese allgemeine Formel fallen, werden beispielsweise in der europäischen Patentanmeldung EP 0 164 514 beschrieben. Bevorzugte kristalline Schichtsilikate sind solche, bei denen x in der genannten allgemeinen Formel die Werte 2 oder 3 annimmt. Insbesondere sind sowohl β- als auch δ-Natriumdisilikate (Na₂Si₂O₅·yH₂O) bevorzugt, wobei β-Natriumdisilikat beispielsweise nach dem Verfahren erhalten werden kann, das in der internationalen Patentanmeldung WO 91/08171 beschrieben ist. δ-Natriumsilikate mit einem Modul zwischen 1,9 und 3,2 können gemäß den japanischen Patentanmeldungen JP 04/238 809 oder JP 04/260 610 hergestellt werden. Auch aus amorphen Alkalisilikaten hergestellte, praktisch wasserfreie kristalline Alkalisilikate der obengenannten allgemeinen Formel, in der x eine Zahl von 1,9 bis 2,1 bedeutet, herstellbar wie in den europäischen Patentanmeldungen EP 0 548 599, EP 0 502 325 und EP 0 452 428 beschrieben, können in Mitteln, welche ein erfindungsgemäßes Polymer enthalten, eingesetzt werden. In einer weiteren bevorzugten Ausführungsform erfindungsgemäßer Mittel wird ein kristallines Natriumschichtsilikat mit einem Modul von 2 bis 3 eingesetzt, wie es nach dem Verfahren der europäischen Patentanmeldung EP 0 436 835 aus Sand und Soda hergestellt werden kann. Kristalline Natriumsilikate mit einem Modul im Bereich von 1,9 bis 3,5, wie sie nach den Verfahren der europäischen Patentschriften EP 0 164 552 und/oder der europäischen Patentanmeldung EP 0 294 753 erhältlich sind, werden in einer weiteren bevorzugten Ausführungsform von Wasch- oder Reinigungsmitteln, welche ein erfindungsgemäßes Polymer enthalten, eingesetzt. Deren Gehalt an Alkalisilikaten beträgt vorzugsweise 1 Gew.-% bis 50 Gew.-% und insbesondere 5 Gew.-% bis 35 Gew.-%, bezogen auf wasserfreie Aktivsubstanz. Falls als zusätzliche Buildersubstanz auch Alkalialumosilikat, insbesondere Zeolith, vorhanden ist, beträgt der Gehalt an Alkalisilikat vorzugsweise 1 Gew.-% bis 15 Gew.-% und insbesondere 2 Gew.-% bis 8 Gew.-%, bezogen auf wasserfreie Aktivsubstanz. Das Gewichtsverhältnis Alumosilikat zu Silikat, jeweils bezogen auf wasserfreie Aktivsubstanzen, beträgt dann vorzugsweise 4:1 bis 10:1. In Mitteln, die sowohl amorphe als auch kristalline Alkalisilikate enthalten, beträgt das Gewichtsverhältnis von amorphem Alkalisilikat zu kristallinem Alkalisilikat vorzugsweise 1:2 bis 2:1 und insbesondere 1:1 bis 2:1.

Zusätzlich zum genannten anorganischen Builder können weitere wasserlösliche oder wasserunlösliche anorganische Substanzen in den Mitteln, welche ein erfindungsgemäßes Soil-release Polymer enthalten, eingesetzt werden. Geeignet sind in diesem Zusammenhang die Alkalicarbonate, Alkalihydrogencarbonate und Alkalisulfate sowie deren Gemische. Derartiges zusätzliches anorganisches Material kann in Mengen bis zu 70 Gew.-% vorhanden sein, fehlt jedoch vorzugsweise ganz.

Zusätzlich können die Mittel weitere in Wasch- und Reinigungsmitteln übliche Bestandteile enthalten. Zu diesen fakultativen Bestandteilen gehören insbesondere Enzyme, Enzymstabilisatoren, Bleichmittel, Bleichaktivatoren, Komplexbildner für Schwermetalle, beispielsweise Aminopolycarbonsäuren, Aminohydroxypolycarbonsäuren, Polyphosphonsäuren und/oder Aminopolyphosphonsäuren, Vergrauungsinhibitoren, beispielsweise Celluloseether, Farbübertragungsinhibitoren, beispielsweise Polyvinylpyrrolidon oder Polyvinylpyrdin-N-oxid, Schauminhibitoren, beispielsweise Organopolysiloxane oder Paraffine, Lösungsmittel und optische Aufheller, beispielsweise Stilbendisulfonsäurederivate. Vorzugsweise sind in Mitteln, welche ein erfindungsgemäßes Polymer enthalten, bis zu 1 Gew.-%, insbesondere 0,01 Gew.-% bis 0,5 Gew.-% optische Aufheller, insbesondere Verbindungen aus der Klasse der substituierten 4,4'-Bis-(2,4,6-triamino-s-triazinyl)-stilben-2,2'-disulfonsäuren, bis zu 5 Gew.-%, insbesondere 0,1 Gew.-% bis 2 Gew.-% Komplexbildner für Schwermetalle, insbesondere Aminoalkylenphosphonsäuren und deren Salze, bis zu 3 Gew.-%, insbesondere 0,5 Gew.-% bis 2 Gew.-% Vergrauungsinhibitoren und bis zu 2 Gew.-%, insbesondere 0,1 Gew.-% bis 1 Gew.-% Schauminhibitoren enthalten, wobei sich die genannten Gewichtsanteile jeweils auf gesamtes Mittel beziehen.

Lösungsmittel, die insbesondere bei flüssigen Mitteln, welche ein erfindungsgemäßes Polymer enthalten, eingesetzt werden, sind neben Wasser vorzugsweise solche, die wassermischbar sind. Zu diesen gehören die niederen Alkohole, beispielsweise Ethanol, Propanol, iso-Propanol, und die isomeren Butanole, Glycerin, niedere Glykole, beispielsweise Ethylen- und Propylenglykol, und die aus den genannten Verbindungsklassen ableitbaren Ether. In derartigen flüssigen Mitteln liegen die erfindungsgemäßen Polyester in der Regel gelöst oder in suspendierter Form vor.

Gegebenenfalls anwesende Enzyme werden vorzugsweise aus der Gruppe umfassend Protease, Amylase, Lipase, Cellulase, Hemicellulase, Oxidase, Peroxidase oder Mischungen aus diesen ausgewählt. In erster Linie kommt aus Mikroorganismen, wie Bakterien oder Pilzen, gewonnene Protease in Frage. Sie kann in bekannter Weise durch Fermentationsprozesse aus geeigneten Mikroorganismen gewonnen werden, die zum Beispiel in den deutschen Offenlegungsschriften DE 19 40 488, DE 20 44 161, DE 22 01 803 und DE 21 21 397, den US-amerikanischen Patentschriften US 3 632 957 und US 4 264 738, der europäischen Patentanmeldung EP 006 638 sowie der internationalen Patentanmeldung WO 91/02792 beschrieben sind. Proteasen sind im Handel beispielsweise unter den Namen BLAP^{(R)}, Savinase^{(R)}, Esperase^{(R)}, Maxatase^{(R)}, Optimase^{(R)}, Alcalase^{(R)}, Durazym^{(R)} oder Maxapem^{(R)} erhältlich. Die einsetzbare Lipase kann aus Humicola lanuginosa, wie beispielsweise in den europäischen Patentanmeldungen EP 258 068, EP 305 216 und EP 341 947 beschrieben, aus Bacillus-Arten, wie beispielsweise in der internationalen Patentanmeldung WO 91/16422 oder der europäischen Patentanmeldung EP 384 717 beschrieben, aus Pseudomonas-Arten, wie beispielsweise in den europäischen Patentanmeldungen EP 468 102, EP 385 401, EP 375 102, EP 334 462, EP 331 376, EP 330 641, EP 214 761, EP 218 272 oder EP 204 284 oder der internationalen Patentanmeldung WO 90/10695 beschrieben, aus Fusarium-Arten, wie beispielsweise in der europäischen Patentanmeldung EP 130 064 beschrieben, aus Rhizopus-Arten, wie beispielsweise in der europäischen Patentanmeldung EP 117 553 beschrieben, oder aus Aspergillus-Arten, wie beispielsweise in der europäischen Patentanmeldung EP 167 309 beschrieben, gewonnen werden. Geeignete Lipasen sind beispielsweise unter den Namen Lipolase^{(R)}, Lipozym^{(R)}, Lipomax^{(R)}, Amano^{(R)}-Lipase, Toyo-Jozo^{(R)}-Lipase, Meito^{(R)}-Lipase und Diosynth^{(R)}-Lipase im Handel erhältlich. Geeignete Amylasen sind beispielsweise unter den Namen Maxamyl^{(R)} und Termamyl^{(R)} handelsüblich. Die einsetzbare Cellulase kann ein aus Bakterien oder Pilzen gewinnbares Enzym sein, welches ein pH-Optimum vorzugsweise im schwach sauren bis schwach alkalischen Bereich von 6 bis 9,5 aufweist. Derartige Cellulasen sind beispielsweise aus den deutschen Offenlegungsschriften DE 31 17 250, DE 32 07 825, DE 32 07 847, DE 33 22 950 oder den europäischen Patentanmeldungen EP 265 832, EP 269 977, EP 270 974, EP 273 125 sowie EP 339 550 bekannt.

Zu den gegebenenfalls, insbesondere in flüssigen Mitteln vorhandenen üblichen Enzymstabilisatoren gehören Aminoalkohole, beispielsweise Mono-, Di-, Triethanol- und -propanolamin und deren Mischungen, niedere Carbonsäuren, wie beispielsweise aus den europäischen Patentanmeldungen EP 376 705 und EP 378 261 bekannt, Borsäure beziehungsweise Alkaliborate, Borsäure-Carbonsäure-Kombinationen, wie beispielsweise aus der europäischen Patentanmeldung EP 451 921 bekannt, Borsäureester, wie beispielsweise aus der internationalen Patentanmeldung WO 93/11215 oder der europäischen Patentanmeldung EP 511 456 bekannt, Boronsäurederivate, wie beispielsweise aus der europäischen Patentanmeldung EP 583 536 bekannt, Calciumsalze, beispielsweise die aus der europäischen Patentschrift EP 28 865 bekannte Ca-Ameisensäure-Kombination, Magnesiumsalze, wie beispielsweise aus der europäischen Patentanmeldung EP 378 262 bekannt, und/oder schwefelhaltige Reduktionsmittel, wie beispielsweise aus den europäischen Patentanmeldungen EP 080 748 oder EP 080 223 bekannt.

Zu den geeigneten Schauminhibitoren gehören langkettige Seifen, insbesondere Behenseife, Fettsäureamide, Paraffine, Wachse, Mikrokristallinwachse, Organopolysiloxane und deren Gemische, die darüberhinaus mikrofeine, gegebenenfalls silanierte oder anderweitig hydrophobierte Kieselsäure enthalten können. Zum Einsatz in partikelförmigen Mitteln sind derartige Schauminhibitoren vorzugsweise an granulare, wasserlösliche Trägersubstanzen gebunden, wie beispielsweise in der deutschen Offenlegungsschrift DE 34 36 194, den europäischen Patentanmeldungen EP 262 588, EP 301 414, EP 309 931 oder der europäischen Patentschrift EP 150 386 beschrieben.

Ferner kann das ein Mittel, welches ein erfindungsgemäßes Polymer enthält, Vergrauungsinhibitoren enthalten. Vergrauungsinhibitoren haben die Aufgabe, den von der Faser abgelösten Schmutz in der Flotte suspendiert zu halten und so das Vergrauen der Fasern zu verhindern. Hierzu sind wasserlösliche Kolloide meist organischer Natur geeignet, beispielsweise die wasserlöslichen Salze polymerer Carbonsäuren, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, zum Beispiel teilhydrolysierte Stärke. Na-Carboxymethylcellulose, Methylcellulose, Methylhydroxyethylcellulose und deren Gemische werden bevorzugt eingesetzt.

Eine weitere Ausführungsform eines derartigen Mittels, welches ein erfindungsgemäßes Soil-release Polymer enthält, enthält Bleichmittel auf Persauerstoffbasis, insbesondere in Mengen im Bereich von 5 Gew.-% bis 70 Gew.-%, sowie gegebenenfalls Bleichaktivator, insbesondere in Mengen im Bereich von 2 Gew.-% bis 10 Gew.-%. Diese in Betracht kommenden Bleichmittel sind die in Waschmitteln in der Regel verwendeten Perverbindungen wie Wasserstoffperoxid, Perborat, das als Tetra- oder Monohydrat vorliegen kann, Percarbonat, Perpyrophosphat und Persilikat, die in der Regel als Alkalisalze, insbesondere als Natriumsalze, vorliegen. Derartige Bleichmittel sind in Waschmitteln, welche ein erfindungsgemäßes Polymer enthalten, vorzugsweise in Mengen bis zu 25 Gew.-%, insbesondere bis zu 15 Gew.-% und besonders bevorzugt von 5 Gew.-% bis 15 Gew.-%, jeweils bezogen auf gesamtes Mittel, vorhanden. Die fakultativ vorhandene Komponente der Bleichaktivatoren umfaßt die üblicherweise verwendeten N- oder O-Acylverbindungen, beispielsweise mehrfach acylierte Alkylendiamine, insbesondere Tetraacetylethylendiamin, acylierte Glykolurile, insbesondere Tetraacetylglykoluril, N-acylierte Hydantoine, Hydrazide, Triazole, Urazole, Diketopiperazine, Sulfurylamide und Cyanurate, außerdem Carbonsäureanhydride, insbesondere Phthalsäureanhydrid, Carbonsäureester, insbesondere Natrium-isononanoyl-phenolsulfonat, und acylierte Zuckerderivate, insbesondere Pentaacetylglukose. Die Bleichaktivatoren können zur Vermeidung der Wechselwirkung mit den Perverbindungen bei der Lagerung in bekannter Weise mit Hüllsubstanzen überzogen beziehungsweise granuliert worden sein, wobei mit Hilfe von Carboxymethylcellulose granuliertes Tetraacetylethylendiamin mit mittleren Korngrößen von 0,01 mm bis 0,8 mm, wie es beispielsweise nach dem in der europäischen Patentschrift EP 37 026 beschriebenen Verfahren hergestellt werden kann, und/oder granuliertes 1,5-Diacetyl-2,4-dioxohexahydro-1,3,5-triazin, wie es nach dem in der deutschen Patentschrift DD 255 884 beschriebenen Verfahren hergestellt werden kann, besonders bevorzugt ist. In Waschmitteln sind derartige Bleichaktivatoren vorzugsweise in Mengen bis zu 8 Gew.-%, insbesondere von 2 Gew.-% bis 6 Gew.-%, jeweils bezogen auf gesamtes Mittel, enthalten.

In einer bevorzugten Ausführungsform ist ein Mittel, in das erfindungsgemäßes beziehungsweise erfindungsgemäß hergestelltes Soil-release Polymer eingearbeitet wird, teilchenförmig und enthält 20 Gew.-% bis 55 Gew.-% anorganischen Builder, bis zu 15 Gew.-%, insbesondere 2 Gew.-% bis 12 Gew.-% wasserlöslichen organischen Builder, 2,5 Gew.-% bis 20 Gew.-% synthetisches Aniontensid, 1 Gew.-% bis 20 Gew.-% nichtionisches Tensid, bis zu 25 Gew.-%, insbesondere 1 Gew.-% bis 15 Gew.-% Bleichmittel, bis zu 8 Gew.-%, insbesondere 0,5 Gew.-% bis 6 Gew.-% Bleichaktivator und bis zu 20 Gew.-%, insbesondere 0,1 Gew.-% bis 15 Gew.-% anorganische Salze, insbesondere Alkalicarbonat und/oder -sulfat.

In einer weiteren bevorzugten Ausführungsform enthält ein derartiges pulverförmiges Mittel, insbesondere zur Verwendung als Feinwaschmittel, 20 Gew.-% bis 55 Gew.-% anorganischen Builder, bis zu 15 Gew.-%, insbesondere 2 Gew.-% bis 12 Gew.-% wasserlöslichen organischen Builder, 4 Gew.-% bis 24 Gew.-% nichtionisches Tensid, bis zu 15 Gew.-%, insbesondere 1 Gew.-% bis 10 Gew.-% synthetisches Aniontensid, bis zu 65 Gew.-%, insbesondere 1 Gew.-% bis 30 Gew.-% anorganische Salze, insbesondere Alkalicarbonat und/oder -sulfat, und weder Bleichmittel noch Bleichaktivator.

Eine weitere bevorzugte Ausführungsform umfaßt ein flüssiges Mittel, enthaltend 5 Gew.-% bis 35 Gew.-% wasserlöslichen organischen Builder, bis zu 15 Gew.-%, insbesondere 0,1 Gew.-% bis 5 Gew.-% wasserunlöslichen anorganischen Builder, bis zu 15 Gew.-%, insbesondere 0,5 Gew.-% bis 10 Gew.-% synthetisches Aniontensid, 1 Gew.-% bis 25 Gew.-% nichtionisches Tensid, bis zu 15 Gew.-%, insbesondere 4 Gew.-% bis 12 Gew.-% Seife und bis zu 30 Gew.-% , insbesondere 1 Gew.-% bis 25 Gew.-% Wasser und/oder wassermischbares Lösungsmittel.

### Beispiele

### Beispiel 1: Herstellung eines hydroxylgruppenterminierten Soil-release-Polyesters des Standes der Technik

In einem beheizbaren Reaktionsgefäß mit Rührer wurden 12,8 kg Terephthalsäure, 19,1 kg Ethylenglykol und 0,1 kg saurer Katalysator (Swedcat^{(R)} 3) unter N₂ auf 200 °C erhitzt und so lange Wasser abgeschieden, bis eine klare Schmelze entstand (Dauer etwa 3 Stunden). Anschließend wurde das so erhaltene Poly-(ethylenterephthalat) ohne Aufarbeitung mit Polyethylenglykol partiell umgeestert. Dazu wurden 85,0 kg Polyethylenglykol (mittleres Molgewicht 3000) und 0,1 kg saurer Katalysator (Swedcat^{(R)} 5) zugesetzt, Vakuum (17 mbar) wurde angelegt und durch Erhitzen auf 220 °C wurde Ethylenglykol kontinuierlich abgeschieden, bis die Viskosität 3440 mPas (bei 100 °C, gemessen mit einem Kegel/Platte-Viskosimeter, Stufe 4, Spindel C) erreicht hatte (Dauer etwa 3,5 Stunden). Das Produkt des Standes der Technik (**V1**) besaß eine OH-Zahl von 23 und einen Erweichungspunkt im Bereich von 50 °C bis 60 °C.

### Beispiele 2 bis 5: Endgruppenmodifizierung

### Beispiel 2:

Eine Mischung aus 150 g des in Beispiel 1 hergestellten hydroxylgruppenterminierten Polyesters **V1** des Standes der Technik, 11,3 g Laurinsäure und 0,1 g eines sauren Katalysators (Swedcat^{(R)} 3) in 50 ml Xylol wurden unter N₂ am Wasserabscheider erhitzt (Badtemperatur 225 °C). Nach 21 Stunden wurde Vakuum (ca. 16 Torr) angelegt und innerhalb 1 Stunde Flüchtiges abgezogen. Man erhielt ein Lauroyl-endgruppenverschlossenes Produkt **P1** mit einer Schmelzviskosität (bei 100 °C, gemessen mit einem Kegel/Platte-Viskosimeter, Stufe 4, Spindel C) von 2800 mPas.

### Beispiel 3:

Unter den gleichen Bedingungen wie in Beispiel 2 wurde **V1** mit 10 g 4-tert.Butylbenzoesäure umgesetzt. Man erhielt ein tert.-Butylbenzoyl-endgruppenverschlossenes Produkt **P2** mit einer Schmelzviskosität (bei 100 °C, gemessen mit einem Kegel/Platte-Viskosimeter, Stufe 4, Spindel C) von 3920 mPas.

### Beispiel 4:

Eine Mischung aus 200 g Polyester **V1** und 15,5 g ε-Caprolacton (4 Molequivalente, bezogen auf **V1**) wurden unter N₂ 3 Stunden bei 160 °C gerührt. Man erhielt ein Hydroxycaproyl-endgruppenverschlossenes Produkt **P3** (mittlerer Oligomerisierungsgrad der Hydroxycarbonsäureendgruppe: 2) mit einer Schmelzviskosität (bei 100 °C, gemessen mit einem Kegel/Platte-Viskosimeter, Stufe 4, Spindel C) von 1360 mPas und einer OH-Zahl von 23.

### Beispiel 5:

Eine Mischung aus 200 g Polyester **V1** und 12,13 g Phthalsäureanhydrid wurden unter N₂ 3 Stunden bei 120 °C gerührt. Zum entstandenen Phthalsäurehalbester wurden 169,6 g 30-fach ethoxylierter Talgalkohol (Dehydol^{(R)} TA 30, Hersteller Henkel), 0,3 g eines sauren Katalysators (Swedcat^{(R)} 3) und 50 ml Xylol gegeben und das Reaktionsgemisch wurde 20 Stunden unter N₂ am Wasserabscheider erhitzt. Man erhielt ein Alkylpolyalkoxycarbonylbenzoylendgruppenverschlossenes Produkt **P4** mit einer Schmelzviskosität (bei 100 °C, gemessen mit einem Kegel/Platte-Viskosimeter, Stufe 4, Spindel C) von 480 mPas.

### Beispiel 6: Herstellung eines neuen hydroxylgruppenterminierten Soil-release-Polyesters

In einem beheizbaren Reaktionsgefäß mit Rührer wurden 15,5 kg Terephthalsäure, 39,5 kg Diethylenglykol und 0,1 kg des sauren Katalysators (Swedcat^{(R)} 3) unter N₂ auf 220 °C erhitzt und so lange Wasser abgeschieden, bis eine klare Schmelze entstand (Dauer etwa 1,5 Stunden). Anschließend wurde das so erhaltene Poly-(diethylenterephthalat) ohne Aufarbeitung mit Polyethylenglykol partiell umgeestert. Dazu wurden 68,3 kg Polyethylenglykol (mittleres Molgewicht 3000) und 0,1 kg saurer Katalysator (Swedcat^{(R)} 5) zugesetzt, Vakuum (17 mbar) wurde angelegt und durch Erhitzen auf 220 °C wurde Diethylenglykol kontinuierlich abgeschieden, bis die Viskosität 540 mPas (bei 100 °C, gemessen mit einem Kegel/Platte-Viskosimeter, Stufe 8, Spindel C) erreicht hatte (Dauer etwa 2 Stunden). Man erhielt ein Produkt **P5**, das eine OH-Zahl von 36 besaß.

### Beispiel 7

93,4 kg des Polyesters **P5** aus Beispiel 6 wurden auf 160 °C erwärmt, 6,5 kg ε-Caprolacton (4 Molequivalente, bezogen auf **P5**) wurden unter N₂ 3 Stunden bei 160 °C gerührt. Man erhielt ein Hydroxycaproyl-endgruppenverschlossenes Produkt **P6** (mittlerer Oligomerisierungsgrad der Hydroxycarbonsäureendgruppe: 2) mit einer Schmelzviskosität (bei 100 °C, gemessen mit einem Kegel/Platte-Viskosimeter, Stufe 8, Spindel C) von 510 mPas und einer OH-Zahl von 35.

### Beispiel 8: Anwendungstests

Pulverförmige Waschmittel, enthaltend 4 Gew.-% Na-C₁₂-Alkylbenzolsulfonat, 4 Gew.-% Na-C_{16/18}-Alkylsulfat, 6 Gew.-% Niotensid (Gemisch ethoxylierter Fettalkohole), 1 Gew.-% Seife, 25 Gew.-% Zeolith Na-A, 6 Gew.-% Na-Polycarboxylat (Sokalan^{(R)} CP 5), 20 Gew.-% Na-Perborat (Tetrahydrat), 6 Gew.-% TAED, 10 Gew.-% Na-Carbonat, 4 Gew.-% Na-Sulfat, 2 Gew.-% Na-Silikat, 1,2 Gew.-% Enzyme (Protease/Lipase/Cellulase) und 1 Gew.-% jeweils eines der Polyester **V1**, **P1, P2** oder **P3** sowie auf 100 Gew.-% Wasser, wurden auf ihre Waschleistung gegenüber fettigen Anschmutzungen getestet. Dazu wurden die in der nachfolgenden Tabelle aufgeführten standardisierte Testanschmutzungen auf Polyester Jersey in einer Waschmaschine Miele^{(R)} W913 im 1-Laugenprogramm zusammen mit 3,5 kg sauberer Füllwäsche bei 40 °C gewaschen (Wasserhärte 16 °dH, Waschmitteldosierung 98 g). Die Testgewebe wurden anschließend getrocknet und ihre Sauberkeit wurde durch Remissionsmessung (bei 460 nm) bestimmt. Die Remissionswerte sind ebenfalls in der nachfolgenden Tabelle angegeben. Man erkennt, daß die erfindungsgemäßen Polymere deutlich bessere Soil-release-Eigenschaften besitzen als das Polymer **V1** des Standes der Technik. Die Wirksamkeiten der erfindungsgemäßen Polymere **P4**, **P5** und **P6** standen denen der angegebenen Polyester **P1, P2** und **P3** nicht nach.

**Tabelle 1:**

| Remissionswerte [%] | | | | |
|---|---|---|---|---|
| Anschmutzung | Waschmittel mit | | | |
| | **V1** | **P1** | **P2** | **P3** |
| **A** | 41,9 | 43,9 | 55,4 | 57,0 |
| **B** | 47,5 | n.b. | 51,1 | 50,9 |
| **C** | 47,2 | 52,2 | 60,2 | 57,0 |
| **D** | 64,2 | 65,4 | 67,3 | 66,0 |
| Anschmutzungen: **A** Lippenstift **B** schwarze Schuhcreme **C** Creme Rouge **D** Hautcreme, blau eingefärbt | | | | |
| n.b.: nicht bestimmt | | | | |

## Patentansprüche

1. Schmutzablösevermögender Polyester der allgemeinen Formel
X-(O-(CHR-)ₐ)_{b}[O-OC-Ph-CO-(O-(CHR-)ₒ)ₚ]_{y}O-Y (I)
in der
a eine Zahl von 2 bis 8,
b eine Zahl von 1 bis 300,
o eine Zahl von 2 bis 8,
p eine Zahl von 1 bis 300 und
y eine Zahl von 1 bis 500 bedeutet,
Ph ein o-, m- oder p-Phenylenrest ist, der 1 bis 4 Substituenten, ausgewählt aus Alkylresten mit 1 bis 22 C-Atomen, Sulfonsäuregruppen, Carboxylgruppen und deren Mischungen, tragen kann,
R ausgewählt wird aus Wasserstoff, einem Alkylrest mit 1 bis 22 C-Atomen und deren Mischungen, und
X und
Y unabhängig voneinander aus Wasserstoff,
Alkyl-, Alkenyl- und Arylmonocarbonsäureresten, ausgewählt aus Capronsäure, Önanthsäure, Caprylsäure, Pelargonsäure, Caprinsäure, Undecansäure, Undecensäure, Laurinsäure, Lauroleinsäure, Tridecansäure, Myristinsäure, Myristoleinsäure, Pentadecansäure, Palmitinsäure, Stearinsäure, Petroselinsäure, Petroselaidinsäure, Ölsäure, Linolsäure, Linolaidinsäure, Linolensäure, Eläostearinsäure, Arachinsäure, Gadoleinsäure, Arachidonsäure, Behensäure, Erucasäure, Brassidinsäure, Clupanodonsäure, Lignocerinsäure, Cerotinsäure, Melissinsäure und Benzoesäure, die 1 bis 5 Substituenten mit insgesamt bis zu 25 C-Atomen trägt,
Hydroxymonocarbonsäureresten mit 2 bis 22 C-Atomen und einem Oligomerisierungsgrad von 1 bis 100 sowie
Dicarbonsäurehalbesterresten, deren zweite Carbonsäuregruppe mit einem Alkohol A-(OCHZCH₂)_{d}-OH verestert ist, bei dem A einen Alkyl- oder Alkenylrest mit 8 bis 22 C-Atomen, Z Wasserstoff oder einen Alkylrest mit 1 bis 2 C-Atomen und d eine Zahl von 1 bis 40 bedeutet, ausgewählt werden mit der Maßgabe, daß X und Y nicht gleichzeitig Wasserstoff sind.

2. Polyester nach Anspruch 1, dadurch gekennzeichnet, daß sowohl Monomerdioleinheiten -O-(CHR-)ₐO- beziehungsweise -O-(CHR-)ₒO- als auch Polymerdioleinheiten -(O-(CHR-)ₐ)_{b}O-beziehungsweise -(O-(CHR-)ₒ)ₚO-, in denen der Polymerisationsgrad b beziehungsweise p im Bereich von 4 bis 200, insbesondere von 12 bis 140 liegt, vorliegen.

3. Polyester nach Anspruch 2, dadurch gekennzeichnet, daß das molare Verhältnis von Monomerdioleinheiten zu Polymerdioleinheiten 100 : 1 bis 1 : 100, insbesondere 10 : 1 bis 1 : 10 beträgt.

4. Polyester nach Anspruch 1, dadurch gekennzeichnet, daß sowohl Oligomerdioleinheiten -(O-(CHR-)ₐ)_{b}O- beziehungsweise -(O-(CHR-)ₒ)ₚO- mit b beziehungsweise p von 2 bis 3 als auch Polymerdioleinheiten -(O-(CHR-)ₐ)_{b}O- beziehungsweise -(O-(CHR-)ₒ)ₚO-, in denen der Polymerisatiosgrad b beziehungsweise p im Bereich von 4 bis 200, insbesondere von 12 bis 140 liegt, vorliegen.

5. Polyester nach Anspruch 4, dadurch gekennzeichnet, daß das molare Verhältnis von Oligomerdioleinheiten zu Polymerdioleinheiten 100 : 1 bis 1 : 100, insbesondere 10 : 1 bis 1 : 10 beträgt.

6. Polyester nach einem der Ansprüche 1 bis 5, dadurch gekennzeichnet, daß sein Molekulargewicht im Bereich von 250 bis 100 000, insbesondere von 500 bis 50 000 und besonders bevorzugt von 1 000 bis 15 000 liegt.

7. Polyester nach einem der Ansprüche 1 bis 6, dadurch gekennzeichnet, daß die dem Rest Ph zugrundeliegende Säure aus Terephtalsäure, Isophthalsäure, Phthalsäure, Mellithsäure, Trimellithsäure, den Isomeren der Sulfophthalsäure, Sulfoisophthalsäure und Sulfoterephtalsäure und deren Gemischen ausgewählt wird.

8. Polyester nach einem der Ansprüche 1 bis 7, dadurch gekennzeichnet, daß die Diolkomponenten HO-(CHR-)ₐOH beziehungsweise HO-(CHR-)ₒOH aus solchen, in denen R Wasserstoff und a beziehungsweise o unabhängig voneinander eine Zahl von 2 bis 8, insbesondere von 2 bis 6 ist, ausgewählt werden.

9. Polyester nach einem der Ansprüche 1 bis 7, dadurch gekennzeichnet, daß die Diolkomponenten HO-(CHR-)ₐOH beziehungsweise HO-(CHR-)ₒOH aus solchen, in denen a beziehungsweise o den Wert 2 aufweist und in denen R unter Wasserstoff und den Alkylresten mit 1 bis 10, insbesondere 1 bis 3 C-Atomen ausgewählt werden.

10. Polyester nach Anspruch 9, dadurch gekennzeichnet, daß die Diolkomponente der Formel HO-CH₂-CHR-OH entspricht.

11. Polyester nach einem der Ansprüche 1 bis 10, dadurch gekennzeichnet, daß den Endgruppen X und Y Hydroxymonocarbonsäuren zugrundeliegen und der Oligomerisierungsgrad im Bereich von 1 bis 50, insbesondere von 1 bis 10 liegt.

12. Polyester nach einem der Ansprüche 1 bis 10, dadurch gekennzeichnet, daß den Endgruppen X und Y Dicarbonsäurehalbester zugrundeliegen, deren eine Carbonsäuregruppe mit einem Alkohol A-(OCHZCH₂)_{d}-OH verestert ist, bei dem A einen Alkyl- oder Alkenylrest mit 12 bis 18 C-Atomen, Z Wasserstoff bedeutet, und der Alkoxylierunsgrad d im Bereich von 1 bis 40, insbesondere 10 bis 35 liegt.

13. Verfahren zur Herstellung von Polyestern gemäß einem der Ansprüche 1 bis 12, wobei man eine Dicarbonsäure-HOOC-Ph-COOH oder deren reaktives Derivat mit einem monomeren Diol HO-(CHR-)ₐOH unter Veresterungsbedingungen miteinander umsetzt und anschließend unter Umesterungsbedingungen mit einem polymeren Diol H-(O-(CHR-)ₒ)ₚOH umsetzt, dadurch gekennzeichnet, daß man anschließend mit einer den Endgruppen X beziehungsweise Y zugrundeliegenden Hydroxymonocarbonsäure und/oder einem Dicarbonsäurehalbester unter Veresterungsbedingungen umsetzt.

14. Verfahren nach Anspruch 13, dadurch gekennzeichnet, daß das molare Verhältnis von Dicarbonsäure beziehungsweise Dicarbonsäurederivat zu monomerem Diol 1 : 1 bis 1 : 10, insbesondere 1 : 1 bis 1 : 4 beträgt.

15. Verfahren nach Anspruch 13 oder 14, dadurch gekennzeichnet, daß man die Umesterung unter Entfernung des monomeren Diols so weit führt, bis das molare Verhältnis von monomerem Diol zu polymerem Diol im entstehenden Polyester im Bereich von 50 : 1 bis 1 : 50, insbesondere von 10 : 1 bis 1 : 10 liegt.

16. Verfahren nach einem der Ansprüche 13 bis 15, dadurch gekennzeichnet, daß man eine Dicarbonsäure HOOC-Ph-COOH oder deren reaktives Derivat mit einem oligomeren Diol H-(O-(CHR-)ₐ)_{b}OH mit b von 2 bis 3 unter Veresterungsbedingungen miteinander umsetzt, anschließend unter Umesterungsbedingungen mit einem polymeren Diol H-(O-(CHR-)ₒ)ₚOH mit p von 4 bis 200, insbesondere von 12 bis 140, umsetzt und mit einer den Endgruppen X beziehungsweise Y zugrundeliegenden Hydroxymonocarbonsäure und/oder einem Dicarbonsäurehalbester unter Veresterungsbedingungen umsetzt.

17. Verfahren nach einem der Ansprüche 13 bis 16, dadurch gekennzeichnet, daß das polymere Diol einen Polymerisationsgrad von 4 bis 200, insbesondere von 10 bis 100 aufweist.

18. Verwendung eines Polyesters gemäß einem der Ansprüche 1 bis 12 oder erhältlich nach dem Verfahren gemäß einem der Ansprüche 13 bis 17 zur Herstellung von Wasch- oder Reinigungsmitteln.

19. Wasch- oder Reinigungsmittel, enthaltend einen Polyester gemäß einem der Ansprüche 1 bis 12 oder erhältlich nach dem Verfahren gemäß einem der Ansprüche 13 bis 17 in Mengen von 0,1 Gew.-% bis 5 Gew.-%, insbesondere 0,5 Gew.-% bis 2,5 Gew.-%.

## Claims

1. A soil-release polyester corresponding to the following general formula:
X-(O-(CHR-)ₐ)_{b}[O-OC-Ph-CO-(O-(CHR-)ₒ)ₚ]_{y}O-Y (I)
in which a is a number of 2 to 8, b is a number of 1 to 300, o is a number of 2 to 8, p is a number of 1 to 300 and y is a number of 1 to 500, Ph is an o-, m- or p-phenylene group which may bear 1 to 4 substituents selected from alkyl groups containing 1 to 22 carbon atoms, sulfonic acid groups, carboxyl groups and mixtures thereof, R is selected from hydrogen, an alkyl group containing 1 to 22 carbon atoms and mixtures thereof and X and Y independently of one another are selected from hydrogen, alkyl, alkenyl and aryl monocarboxylic acid residues selected from caproic acid, oenanthic acid, caprylic acid, pelargonic acid, capric acid, undecanoic acid, undecenoic acid, lauric acid, lauroleic acid, tridecanoic acid, myristic acid, myristoleic acid, pentadecanoic acid, palmitic acid, stearic acid, petroselic acid, petroselaidic acid, oleic acid, linoleic acid, linolaidic acid, linolenic acid, elaeostearic acid, arachic acid, gadoleic acid, arachidonic acid, behenic acid, erucic acid, brassidic acid, clupanodonic acid, lignoceric acid, cerotic acid, melissic acid and benzoic acid which bear 1 to 5 substituents containing in all up to 25 carbon atoms; hydroxymonocarboxylic acid residues containing 2 to 22 carbon atoms and having a degree of oligomerization of 1 to 100 and dicarboxylic acid semiester residues of which the second carboxylic acid group is esterified with an alcohol A-(OCHZCH₂)_{d}-OH, where A is an alkyl or alkenyl group containing 8 to 22 carbon atoms, Z is hydrogen or an alkyl group containing 1 to 2 carbon atoms and d is a number of 1 to 40, with the proviso that X and Y are not both hydrogen.

2. A polyester as claimed in claim 1, characterized in that both monomer diol units -O-(CHR-)ₐO- or -O-(CHR-)ₒO- and polymer diol units -O-(CHR-)ₐ)_{b}O- or -(O-(CHR-)ₒ)ₚO-, in which the degree of polymerization b or p is in the range from 4 to 200 and more particularly in the range from 12 to 140, are present.

3. A polyester as claimed in claim 2, characterized in that the molar ratio of monomer diol units to polymer diol units is from 100:1 to 1:100 and more particularly from 10:1 to 1:10.

4. A polyester as claimed in claim 1, characterized in that both oligomer diol units -(O-(CHR-)ₐ)_{b}O- or -(O-(CHR-)ₒ)ₚO- with b or p = 2 to 3 and polymer diol units -(-(CHR-)ₐ)_{b}O- or -(O-(CHR-)ₒ)ₚO-, in which the degree of polymerization b or p is in the range from 4 to 200 and more particularly in the range from 12 to 140, are present.

5. A polyester as claimed in claim 4, characterized in that the molar ratio of oligomer diol units to polymer diol units is from 100:1 to 1:100 and more particularly from 10:1 to 1:10.

6. A polyester as claimed in any of claims 1 to 5, characterized in that it has a molecular weight in the range from 250 to 100,000, preferably in the range from 500 to 50,000 and more preferably in the range from 1,000 to 15,000.

7. A polyester as claimed in any of claims 1 to 6, characterized in that the acid on which the residue Ph is based is selected from terephthalic acid, isophthalic acid, phthalic acid, mellitic acid, trimellitic acid, the isomers of sulfophthalic acid, sulfoisophthalic acid and sulfoterephthalic acid and mixtures thereof.

8. A polyester as claimed in any of claims 1 to 7, characterized in that the diol components HO-(CHR-)ₐOH and HO-(CHR-)ₒOH are selected from those in which R is hydrogen and a and o independently of one another are numbers of 2 to 8 and more particularly 2 to 6.

9. A polyester as claimed in any of claims 1 to 7, characterized in that the diol components HO-(CHR-)ₐOH and HO-(CHR-)ₒOH are selected from those in which a and o have the value 2 and R is selected from hydrogen and alkyl groups containing 1 to 10 and more particularly 1 to 3 carbon atoms.

10. A polyester as claimed in claim 9, characterized in that the diol component corresponds to the formula HO-CH₂-CHR-OH.

11. A polyester as claimed in any of claims 1 to 10, characterized in that the terminal groups X and Y are based on hydroxymonocarboxylic acids and the degree of oligomerization is in the range from 1 to 50 and more particularly in the range from 1 to 10.

12. A polyester as claimed in any of claims 1 to 10, characterized in that the terminal groups X and Y are based on dicarboxylic acid semiesters of which one carboxylic acid group is esterified with an alcohol A-(OCHZCH₂)_{d}-OH, where A is an alkyl or alkenyl group containing 12 to 18 carbon atoms, Z is hydrogen and the degree of alkoxylation d is in the range from 1 to 40 and more particularly in the range from 10 to 35.

13. A process for the production of the polyesters claimed in any of claims 1 to 12 in which a dicarboxylic acid HOOC-Ph-COOH or a reactive derivative thereof is reacted with a monomeric diol HO-(CHR-)ₐOH under esterification conditions and then with a polymeric diol H-(O-(CHR-)ₒ)ₚOH under transesterification conditions, characterized in that the reaction product is then reacted with a hydroxymonocarboxylic on which the terminal groups X and Y are based and/or with a dicarboxylic acid semiester under esterification conditions.

14. A process as claimed in claim 13, characterized in that the molar ratio of dicarboxylic acid or dicarboxylic acid derivative to monomeric diol is from 1:1 to 1:10 and more particularly from 1:1 to 1:4.

15. A process as claimed in claim 13 or 14, characterized in that the transesterification accompanied by removal of the monomeric diol is continued until the molar ratio of monomeric diol to polymeric diol in the polyester formed is in the range from 50:1 to 1:50 and more particularly in the range from 10:1 to 1:10.

16. A process as claimed in any of claims 13 to 15, characterized in that a dicarboxylic acid HOOC-Ph-COOH or a reactive derivative thereof is reacted with an oligomeric diol H-(O-(CHR-)ₐ)_{b}OH with b = 2 to 3 under esterification conditions and then with a polymeric diol H-(O-(CHR-)ₒ)ₚOH with p = 4 to 200, more particularly 12 to 140, under transesterification conditions and with a hydroxymonocarboxylic acid on which the terminal groups X and Y are based and/or a dicarboxylic acid semiester under esterification conditions.

17. A process as claimed in any of claims 13 to 16, characterized in that the polymeric diol has a degree of polymerization of 4 to 200 and more particularly 10 to 100.

18. The use of the polyester claimed in any of claims 1 to 12 or obtainable by the process claimed in any of claims 13 to 17 for the production of detergents.

19. A detergent containing the polyester claimed in any of claims 1 to 12 or obtainable by the process claimed in any of claims 13 to 17 in quantities of 0.1% by weight to 5% by weight and more particularly in quantities of 0.5% by weight to 2.5% by weight.

## Revendications

1. Polyester doté d'un pouvoir de décollement de la salissure ou antisalissant de formule générale
X-(O-(CHR-)ₐ)_{b}[O-OC-Ph-CO-(O-(CHR-)ₒ)ₚ]_{y}O-Y (I)
dans laquelle
a représente un nombre de 2 à 8,
b correspond à un nombre de 1 à 300,
o équivaut à un nombre de 2 à 8,
p est un nombre de 1 à 300 et
y représente un nombre de 1 à 500,
Ph correspond à un radical o-, m- ou p-phénylène, qui peut porter 1 à 4 substituants sélectionnés parmi les radicaux alkyle comportant 1 à 22 atomes de C, les groupes d'acide sulfonique, les groupes carboxyle et les mélanges de ceux-ci,
R est sélectionné parmi l'hydrogène, un radical alkyle comportant 1 à 22 atomes de C et les mélanges de ceux-ci, et
X et
Y sont sélectionnés indépendamment l'un de l'autre parmi l'hydrogène, des esters d'acides alkyl-, alcényl- et arylmonocarboxyliques, sélectionnés parmi les acides caproïque, énantique, caprylique, pélargonique, caprique, undécylique undécylénique, laurique, lauroléique, tridécanoïque, myristique, myristoléique, pentadécanoïque, palmitique, stéarique, pétrosélinique, pétrosélaïdique, oléique, linoléique, linolaïdique, linolénique, éléostéarique, arachique, gadoléique, arachidonique, béhénique, érucique, brassidique, clupanodonique, lignocérique, cérotique, mélissique et benzoïque, qui porte(nt) de 1 à 5 substituants avec au total jusqu'à 25 atomes de C, des esters d'acides hydroxymonocarboxyliques comportant 2 à 22 atomes de C et avec un degré d'oligomérisation de 1 à 100, ainsi que des radicaux de semi-esters d'acides dicarboxyliques, dont le deuxième groupe d'acide carboxylique est estérifié avec un alcool de formule A-(OCHZCH₂)_{d}-OH, dans laquelle A représente un radical alkyle ou alcényle comportant 8 à 22 atomes de C, Z correspond à l'hydrogène ou à un radical alkyle comptant 1 à 2 atomes de C, et d est un nombre entre 1 et 40, à la condition que X et Y ne soient pas simultanément l'hydrogène.

2. Polyester selon la revendication 1, caractérisé en ce qu'il renferme tant des unités de diols monomères -O-(CHR-)ₐO- ou -O-(CHR-)ₒO, que des unités de diols polymères -(O-(CHR-)ₐ)_{b}O- ou -(O-(CHR-)ₒ)ₚO-, dans lesquelles le degré de polymérisation b ou de p se situe dans l'intervalle de 4 à 200, en particulier de 12 à 140.

3. Polyester selon la revendication 2, caractérisé en ce que le rapport molaire des unités de diols monomères et des unités de diols polymères atteint 100:1 à 1:100, en particulier, 10:1 à 1:10.

4. Polyester selon la revendication 1, caractérisé en ce qu'il renferme tant des unités de diols oligomères -(O-(CHR-)ₐ)_{b}O- ou -(O-(CHR-)ₒ)ₚO- avec un b ou un p de 2 à 3, que des unités de diols polymères -(O-(CHR-)ₐ)_{b}O- ou -(O-(CHR-)ₒ)ₚO-, dans lesquelles le degré de polymérisation b ou p se situe dans l'intervalle de 4 à 200, en particulier de 12 à 140.

5. Polyester selon la revendication 4, caractérisé en ce que le rapport molaire des unités de diols oligomères et des unités de diols polymères atteint 100:1 à 1:100, en particulier 10:1 à 1:10.

6. Polyester selon une des revendications 1 à 5, caractérisé en ce que son poids moléculaire est compris dans l'intervalle de 250 à 100 000, en particulier de 50 à 50 000 et avec une préférence particulière, de 1000 à 15 000.

7. Polyester selon une des revendications 1 à 6, caractérisé en ce que l'acide à la base du radical Ph est sélectionné parmi les acides téréphtalique, isophtalique, phtalique, mellitique et trimellitique, les isomères des acides sulfophtalique, sulfoisophtalique et sulfotéréphtalique, ainsi que les mélanges de ceux-ci.

8. Polyester selon une des revendications 1 à 7, caractérisé en ce que les composants diols HO-(CHR-)ₐOH ou HO-(CHR-)ₒOH sont sélectionnés parmi ceux dans lesquels R est l'hydrogène, et a ou o correspondent indépendamment l'un de l'autre à un nombre de 2 à 8, en particulier de 2 à 6.

9. Polyester selon une des revendications 1 à 7, caractérisé en ce que les composants diols HO-(CHR-)ₐOH ou HO-(CHR-)ₒOH sont sélectionnés parmi ceux dans lesquels a ou o possède la valeur 2 et dans lesquels R est sélectionné parmi l'hydrogène et les radicaux alkyle comportant 1 à 10, en particulier 1 à 3 atomes de C.

10. Polyester selon la revendication 9, caractérisé en ce que le composant diol correspond à la formule HO-CH₂-CHR-OH.

11. Polyester selon une des revendications 1 à 10, caractérisé en ce que des acides hydroxymonocarboxyliques sont à la base des groupes terminaux X et Y et que le degré d'oligomérisation est compris dans l'intervalle de 1 à 50, en particulier de 1 à 10.

12. Polyester selon une des revendications 1 à 10, caractérisé en ce que des semi-esters d'acides dicarboxyliques sont à la base des groupes terminaux X et Y, un des groupes d'acide carboxylique étant estérifié avec un alcool de formule A-(OCHZCH₂)_{d}-OH, dans laquelle A représente un radical alkyle ou alcényle comportant 12 à 18 atomes de C, Z correspond à l'hydrogène et le degré d'alcoxylation d est compris dans l'intervalle de 1 à 40, en particulier de 10 à 35.

13. Procédé de production de polyesters selon une des revendications 1 à 12, dans lequel on fait réagir dans des conditions d'estérification un acide dicarboxylique HOOC-Ph-COOH ou un dérivé réactif de celui-ci avec un diol monomère HO-(CHR-)ₐOH, et ensuite dans des conditions de transestérification, avec un diol polymère H-(O-(CHR-)ₒ)ₚOH, caractérisé en ce que t'on opère ensuite la réaction dans des conditions d'estérification avec un acide hydroxymonocarboxylique à la base des groupes terminaux X ou Y et/ou avec un semi-ester d'acide dicarboxylique.

14. Procédé selon la revendication 13, caractérisé en ce que le rapport molaire de l'acide dicarboxylique ou du dérivé d'acide dicarboxylique et du diol monomère atteint 1:1 à 1:10, en particulier 1:1 à 1:4.

15. Procédé selon la revendication 13 ou 14, caractérisé en ce que l'on opère la transestérification avec élimination du diol monomère jusqu'à ce que le rapport molaire du diol monomère et du diol polymère dans le polyester obtenu soit compris dans la plage de 50:1 à 1:50, en particulier de 10:1 à 1:10.

16. Procédé selon une des revendications 13 à 15, caractérisé en ce que l'on fait réagir dans des conditions d'estérification un acide dicarboxylique HOOC-Ph-COOH ou un dérivé réactif de celui-ci avec un diol oligomère H-(O-CHR-)ₐ)_{b}OH avec un b de 2 à 3, et ensuite dans des conditions de transestérification, avec un diol polymère H-(O-(CHR-)ₒ)ₚOH avec un p de 4 à 200, en particulier de 12 à 140, et dans des conditions d'estérification avec un acide hydroxymonocarboxylique à la base des groupes terminaux X ou Y et/ou avec un semi-ester d'acide dicarboxylique.

17. Procédé selon une des revendications 13 à 16, caractérisé en ce que le diol polymère présente un degré de polymérisation de 4 à 200, en particulier de 10 à 100.

18. Utilisation d'un polyester selon une des revendications 1 à 12, ou obtenable selon le procédé conforme à une des revendications 13 à 17, pour la production de produits de lavage ou de nettoyage.

19. Produit de lavage ou de nettoyage renfermant un polyester selon une des revendications 1 à 12, ou obtenable selon le procédé conforme à une des revendications 13 à 17, en proportions de 0,1 à 5 % en poids, en particulier de 0,5 à 2,5 % en poids.
